# EUROPEAN PATENT APPLICATION

(11) **EP 2 821 946 A1**
(43) Date of publication of application: **07.01.2015**
(21) Application number: 13275149.6
(22) Date of filing: 03.07.2013
(51) Int. Cl.: G06Q 10/08

(54) **Container loading**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed are apparatus and methods for loading containers (e.g. shipping containers) onto or into other containers (e.g. vehicles). The method comprises: providing a first container (36); providing a plurality of second containers (2) for loading into the first container (36); for each of the second containers (2), acquiring, by one or more processors (30), a weight or mass, and a centre of mass, of that second container (2) and its contents; using the acquired weights or masses and the acquired centres of mass, and using dimensions of the first container (36), determining, by the one or more processors (30), a configuration for the second containers (2) within the first container (2); wherein the configuration for the second containers (2) within the first container (36) is determined such that one or more criteria are satisfied.

## Description

### FIELD OF THE INVENTION

The present invention relates the loading and configuration of containers.

### BACKGROUND

Typically, reusable intermodal containers (which may also be referred to as containers, freight containers, ISO containers, shipping containers, hi-cube containers, boxes, conex boxes, and sea cans) are used to transport and store cargo. An intermodal container may, for example, be made of steel.

The terminology "intermodal container" is used herein to refer to a container, e.g. a shipping container, that can be moved from one mode of transport to another without unloading and reloading the contents of the container.

Loading intermodal containers onto vehicles tends to be a time-consuming process as care needs to be taken to ensure that the vehicle is balanced and not overloaded.

### SUMMARY OF THE INVENTION

In a first aspect, the present invention provides for loading containers (e.g. shipping containers) onto or into other containers (e.g. vehicles). The method comprises: providing a first container; providing a plurality of second containers, the plurality of second containers being for loading into (e.g. onto) the first container; for each of the second containers, acquiring (e.g. from that second container), by one or more processors, a weight or mass of that second container and its content; for each of the second containers, acquiring (e.g. from that second container), by one or more processors, a centre of mass of that second container and its contents; using the acquired weights or masses of the second containers and the determined centres of mass of the second containers, and using dimensions of the first container, determining, by the one or more processors, a configuration for the second containers within the first container; wherein the configuration for the second containers within the first container is determined such that one or more criteria are satisfied.

The method may further comprise: placing the second containers into the first container in accordance with the determined configuration.

The first container may comprise a plurality of load cells, the load cells being spatially separated from one another. Placing the second containers into the first container may cause each of the second containers to exert a weight force upon one or more of the load cells. The method may further comprise, after the second containers have been placed into the first container in accordance with the determined configuration, generating, by each of the load cells that have a weight force exerted upon them by a second container, a load signals indicative of the weight exerted on that load cell by the second containers, and processing, by the one or more processors, the one or more load signals so as to determine values for one or more parameters.

The method may further comprise, using the one or more determined parameter values, verifying or otherwise that the second containers have been placed into the first container in accordance with the determined configuration.

The first container may be a vehicle. The method may further comprise controlling the vehicle dependent upon the one or more determined parameter values.

The one or more criteria may comprise at least one criterion selected from the group of criteria consisting of: a criterion that the centre of mass of the combination of the first container and the second containers within the first container is within a pre-specified distance of a desired centre of mass location; a criterion that a total weight or mass of the second containers in the first container does not exceed a first threshold value; a criterion that the combined weight or mass of the first container and the second containers within the first container does not exceed a second threshold value; and a criterion that a particular second container is located at a particular location within the first container.

Each of the second containers may comprise a storage module storing the weight or mass and the centre of mass of that second container. The one or more processors may acquire the weights or masses and the centres of mass of the second containers from the storage modules.

Each of the second containers may comprise a transmitter module operatively coupled to the storage module of that second container. The steps of acquiring, by the processors, the weights or masses and the centres of mass of the second containers may comprise, for each second container, transmitting, by the transmitter module of that container to a receiver module, a signal specifying the weight or mass and the centre of mass of that second container. The receiver module may be operatively coupled to the one or more processors such that information may be sent from the receiver module to the one or more processors.

Each of the second containers may comprise a plurality of load cells. These load cells may be spatially separated from one another.

The steps of acquiring, by the processors, the weights or masses and the centres of mass of the second containers may comprise: for each second container, generating, by each load cell of that second container, a load signal indicative of a weight exerted on that load cell by one or more objects contained within that second container; and, for each second container, processing, by the one or more processors, the one or more load signals generated by the one or more load cells of that second container so as to determine the weight or mass and the centre of mass of that second container.

The first container may be a vehicle (e.g. an aircraft) or part of a vehicle (e.g. a cargo bay of an aircraft).

In a further aspect, the present invention provides apparatus comprising: a first container; a plurality of second containers, the plurality of second containers being for loading into the first container; and one or more processors configured to: for each of the second containers, acquire a weight or mass of that second container and its contents; for each of the second containers, acquire a centre of mass of that second container and its contents; using the acquired weights or masses of the second containers and the acquired centres of mass of the second containers, and using dimensions of the first container, determining, by the one or more processors, a configuration for the second containers within the first container; wherein the configuration for the second containers within the first container is determined such that one or more criteria are satisfied.

The first container may comprise a plurality of load cells, the load cells being spatially separated from one another.

Each of the load cells may be configured to, in response to the second containers being placed into the first container such that each of the second containers exerts a weight force upon one or more of the load cells, generate a load signal indicative of the weight exerted on that load cell.

The one or more processors may be further configured to process the one or more load signals so as to determine values for one or more parameters.

The one or more processors may be further configured to, using the one or more determined parameter values, verify or otherwise that the second containers have been placed into the first container in accordance with the determined configuration.

The first container may be a vehicle (e.g. an aircraft) or part of a vehicle (e.g. a cargo bay of an aircraft).

The one or more processors may be located in one or more devices (e.g. a tablet computer) that are remote from the first container and the second containers.

### BRIEF DESCRIPTION OF THE DRAWINGS

Figure 1 is a schematic illustration (not to scale) of a perspective view of a container;
Figure 2 is a schematic illustration (not to scale) of a perspective view of a floor of the container;
Figure 3 is a schematic illustration (not to scale) showing a system that includes the container;
Figure 4 is a process flow chart showing certain steps of a process in which the container is implemented;
Figure 5 is a schematic illustration (not to scale) showing an aircraft; and
Figure 6 is a process flow chart showing certain steps of a process in which the container and the aircraft are implemented.

### DETAILED DESCRIPTION

It will be appreciated that relative terms such as top and bottom, front and back, and so on, are used merely for ease of reference to the Figures, and these terms are not limiting as such, and any two differing directions or positions and so on may be implemented.

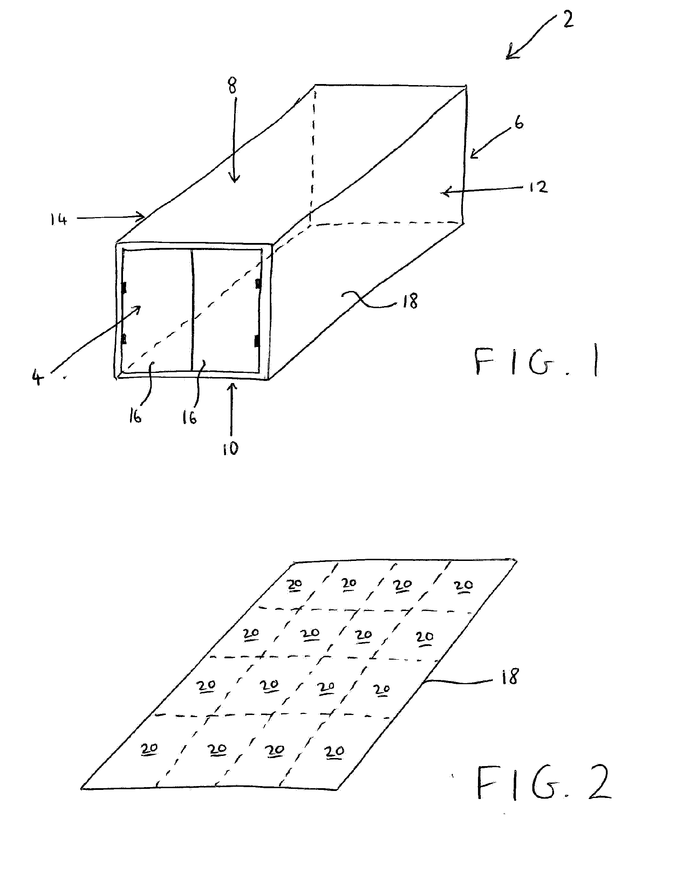

Figure 1 is a schematic illustration (not to scale) of a perspective view of an embodiment of a container 2.

In this embodiment, the container 2 is a reusable intermodal container. In this embodiment, the container 2 is a substantially cuboid shaped container. The container 2 comprises a front wall 4, a rear wall 6 (which is opposite to the front wall 4), a top wall 8, a bottom wall 10 (which is opposite to the top wall 8), and two opposing side walls, namely a first side wall 12 and a second side wall 14.

In this embodiment, the length of the container 2 (i.e. a distance from the front wall 4 to the rear wall 6) is approximately 20ft (6.10m). However, in other embodiments, the length of the container 2 is a different distance e.g. 4ft, 6ft, 40ft (12.19m) or 60ft (18.29m). In this embodiment, the height of the container 2 (i.e. a distance from the top wall 8 to the bottom wall 10) is approximately 8.5ft (2.59m). However, in other embodiments, the height of the container 2 is a different distance. In this embodiment, the width of the container 2 (i.e. a distance from the first side wall 12 to the second side wall 14) is approximately 8ft (2.44m). However, in other embodiments, the width of the container 2 is a different distance.

In this embodiment, the front wall 4 of the container 2 comprises two doors 16. Each of the doors 16 is hinged along an edge to a respective side wall 12, 14 of the container 2 such that the doors 16 may open outwards from the container 2, thereby allowing access into the container 2. In other embodiments, the container comprises a different number and/or different type of door, one or more of which may be located on a different container wall. The doors 16 allow for human and/or vehicular access into the container 2.

In this embodiment, the container 2 comprises a steel frame comprising a plurality of steel beams that are attached together (e.g. by welding) to form a cuboid frame. Each corner of the steel frame may include a corner fitting that may be used to attach together two or more containers 2.

In this embodiment, the rear wall 6, the top wall 8, the bottom wall 10, and the side walls 12, 14 each comprise a solid sheet of corrugated steel that is welded along its edges to the steel frame. In some embodiments, one or more of the rear wall 6, the top wall 8, the bottom wall 10, and the side walls 12, 14 may be provided by a different type of wall. For example, the rear wall 6 of the container 2 may be the same as the front wall 4, i.e. the rear wall 6 may comprise hinged doors that may provide human/vehicular access into the container 2.

The bottom wall 10 of the container comprises a surface that forms a floor of the container. This surface is hereinafter referred to as the "container floor" and is indicated in Figure 1 by the reference numeral 18. The container floor 18 is described in more detail later below with reference to Figure 2.

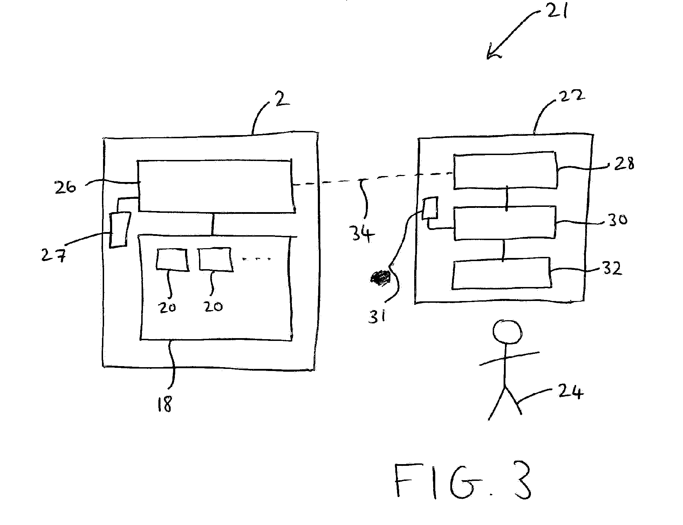

Further components of the container 2 will be described in more detail later below with reference to Figure 3.

Figure 2 is a schematic illustration (not to scale) of a perspective view of the container floor 18.

In this embodiment, the container floor 18 comprises a plurality of load sensing elements 20.

In this embodiment, each load sensing element 20 is configured to convert an input force (i.e. a weight of an item placed upon that load sensing element 20) into an electrical signal that is indicative of the input force.

In this embodiment, the load sensing elements 20 are arranged in a grid-like pattern on the container floor 18. Each load sensing element 20 has a different respective position on the container floor 18. In other embodiments, the load sensing elements are arranged in a different pattern.

In this embodiment, the entirety of the container floor 18 is covered by load sensing elements 20 such that an item placed anywhere on the container floor 18 is in contact with (and acts as an input load to) at least one load sensing element 20.

In this embodiment, the container floor 18 is a substantially flat surface. This may, for example, be provided by a top surface of each of the load sensing elements 20 being contiguous with a top surface of each of the other load sensing elements 20 that is adjacent to that load sensing element 20.

Each load sensing element 20 comprises any appropriate type of load sensor (i.e. a load cell) such as a strain gage (strain sensor) type load cell, a folk vibrating type, a string vibrating type, an electrostatic capacity type, a piezoelectric type, a magneto-striction type, or a gyroscope type.

Figure 3 is a schematic illustration (not to scale) showing a system 21 in which the container 2 is implemented.

The system comprises the container 2, a tablet computer 22 and a user 24.

In this embodiment, in addition to the components described above with reference to Figures 1 and 2, the container 2 further comprises a first transceiver module 26 and a first storage module 27.

In this embodiment, the first transceiver module 26 is connected to each of the load sensing elements 20 such that information may be sent between each of the load sensing elements 20 and the first transceiver module 26. Also, the first transceiver module 26 is connected to first storage module 27 such that information may be sent between each of the first transceiver module 26 and the first storage module 27.

In this embodiment, the first transceiver module 26 is configured to transmit information received from the load sensing elements 20, from the container 2, to an entity remote from the container 2, for use by that remote entity. In particular, in this embodiment, the first transceiver module 26 is configured to transmit information to the tablet computer 22.

In this embodiment, first storage module 27 is configured to store information relating to the container 2. For example, the first storage module 27 may store information that may be used to identify the container 2 (e.g. an identification number), information about the contents of the container 2, information about an origin and/or destination of the container 2, information about an owner or user of the container 2, etc.

In some embodiments, the first transceiver module 26 and the first storage module 27 are provided by one or more radio frequency identification (RFID) tags for storing and transmitting information relating to the container 2.

In this embodiment, the tablet computer 22 comprises a second transceiver module 28, a processor 30, a second storage module 31, and a touchscreen display 32.

In this embodiment, the first transceiver module 26 (located on the container 2) is connected to the second transceiver module 28 (located in the tablet computer 22) by a wireless communications link 34. The wireless communications link 34 is such that information may be sent between the first transceiver module 26 and the second transceiver module 28.

The second transceiver module 28 may include a RFID tag reader (e.g. a passive or active RFID reader) for reading an RFID tag located on the container 2.

In this embodiment, the second transceiver module 28 is also connected to the processor 34 such that information may be sent between the second transceiver module 28 and the processor 30.

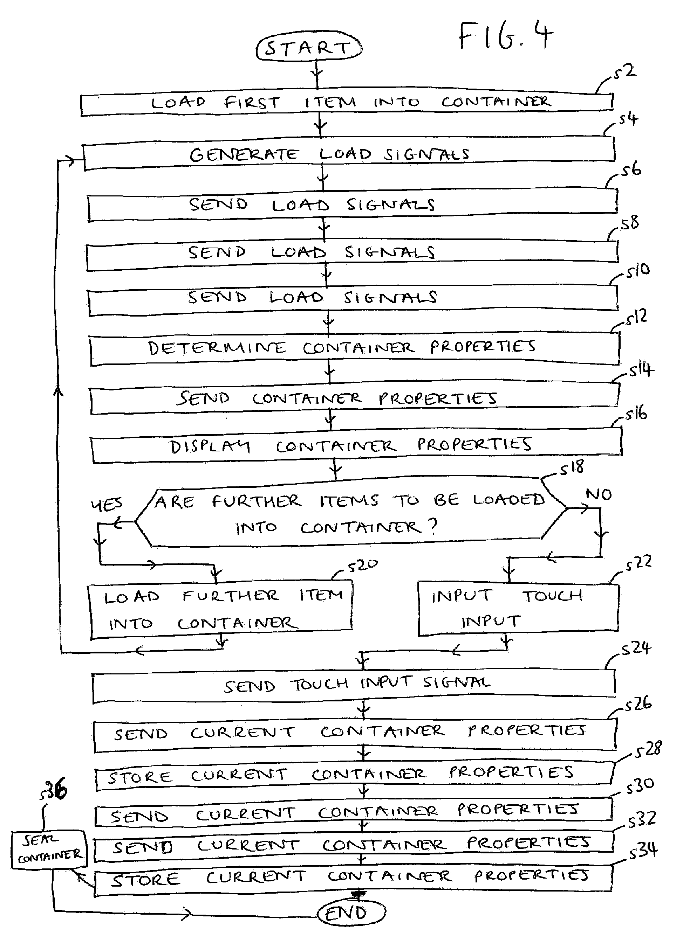

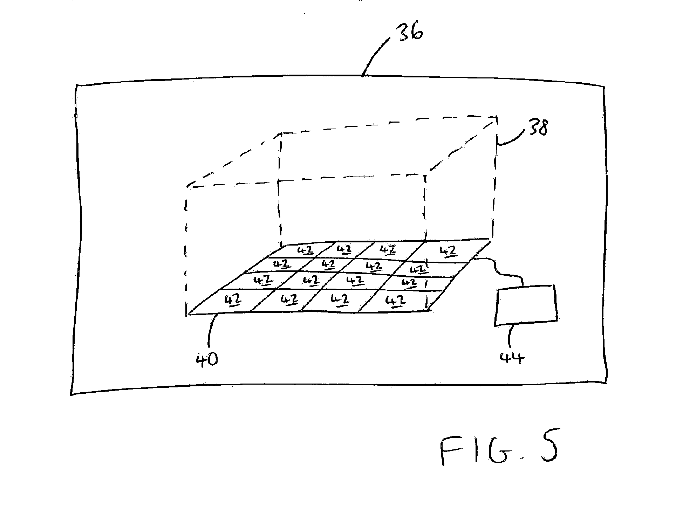

In addition to being connected to the second transceiver module 28, the processor 30 is connected to the second storage module 31 and the touchscreen display 32 such that information may be sent between the processor 30 and each of the second storage module 31 and the touchscreen display 32. As described in more detail later below with reference to Figures 4 and 5, in operation, the processor 30 is configured to process information received by the processor 30 from the second transceiver 28 and/or the touchscreen display 32.

The second storage module 31 is for storing information received by the second storage module 31 from the processor 30.

In this embodiment, the touchscreen display 32 is configured to display information (e.g. information received by the touchscreen display 32 from the processor 30) to the user 24. Also, touchscreen display 32 is configured to receive touch inputs from the user 24.

The user 24 is a user of the tablet computer 22.

Figure 4 is a process flow chart showing certain steps of a first process in which the container 2 is implemented.

At step s2, the user 24 (or another party) places a first item that is to be transported within the container 2 on the container floor 18. Thus, the first item is placed inside the container 2 such that the first item is in contact with one or more of the load sensing elements 20.

At step s4, each of the load sensing elements 20 generates an electrical signal indicative of an input load to that load sensing element 20.

Thus, in this embodiment, each of the load sensing elements 20 upon which one or more items have been placed generates an electrical signal indicative of the weight exerted on that load sensing element 20 by those items. Similarly, each of the load sensing elements 20 that has not had an item placed upon it generates an electrical signal indicative of no load.

At step s6, the load sensing elements 20 send the generated load signals to the first transceiver module 26. Each load signal may include an identifier for identifying which of the load sensing elements 20 produced that signal.

At step s8, the first transceiver module 26 transmits the loads signals to the second transceiver module 28.

At step s10, the second transceiver module 28 sends the load signals to the processor 30.

At step s12, the processor 30 processes the received load signals to determine the following properties or parameters relating to the container 2. In other embodiments, the loads signals are processed by the processor 30 to determine one or more different properties or parameters relating to the container 2 instead of or in addition to one or more of the following properties or parameters.

A first parameter that is determined by the processor 30 is a current centre of mass (within a 2-dimensional plane that is parallel to, and includes, the container floor 18) of the combined container 2 and items placed therein. This centre of mass is a unique point in the 2-dimensional plane that is parallel to, and includes, the container floor 18. The centre of mass of the combination of the container 2 and the one or more items placed into the container 2 may, for example, be expressed as a set of coordinates (e.g., x- and y-coordinates) that define a point in the 2-dimensional plane that is parallel to, and includes, the container floor 18. These coordinates may be in relation to a reference point, i.e. an origin, which may, for example, be located at a corner of the container 2. The centre of mass of the combination of the container 2 and the one or more items placed into the container 2 tends to be relatively easy for the processor 30 to calculate. The processor 30 may, for example, determine the centre of mass using the received load signals, the locations of the load sensing elements 20 within the container 2, and an initial centre of mass of the container 2 (i.e. a centre of mass of the empty container 2). The locations of the load sensing elements 20 within the container 2 may be specified, for example, by the user 24 or acquired by the processor 30 in some other appropriate way. The initial centre of mass of the container 2 may be specified, for example, by the user 24 or acquired by the processor 30 in some other appropriate way.

In other embodiments, a centre of mass of the combined container 2 and items placed therein within 3-dimensional space is determined instead of or in addition to the centre of mass in the above mentioned 2-dimensional space.

A second parameter that is determined by the processor 30 is a total combined weight of the container 2 and the one or more items that have been placed therein. The combined weight of the container 2 and the one or more items that have been placed therein tends to be relatively easy for the processor 30 to calculate. The processor 30 may, for example, determine the combined weight using the received load signals and a predetermined or pre-specified weight of the empty container 2.

A third parameter that is determined by the processor 30 is a total weight of the one or more items that have been placed into the container 2. The total weight of the items tends to be relatively easy for the processor 30 to calculate. The processor 30 may, for example, determine the total weight of the items using the received load signals.

A fourth parameter that is determined by the processor 30 is a location of the items within the container 2. In other words, the processor 30 may determine whereabouts in the container 2 the items are located. Locations of the items within the container 2 may, for example, be expressed as a footprint of the items on the container floor 18. The footprint of the items on the container floor 18 tends to be relatively easy for the processor 30 to calculate. The processor 30 may, for example, determine the footprint of the items on the container floor 18 using the received load signals.

In some embodiments, the processor 30 may also determine the total pressure exerted on the container floor 18 by the items placed in the container 2. This may, for example, be determined using the weights of the items and the footprints of the items on the container floor.

At step s14, the processor 30 sends some or all of the information determined by the processor 30 at step s12 to the touchscreen display 32.

At step s16, the touchscreen display 32 displays the received information to the user 22.

The information received by the touchscreen display 32 may be displayed in any appropriate way to the user 24. For example, in some embodiments, a digital wire frame model of the container 2 may be displayed on the touchscreen display 32. Simultaneously with the display of the digital model of the container 2, the location of the centre of mass of the container 2 and its contents may also be displayed, e.g. as a point on the screen that has a fixed location with respect to the digital model of the container 2. In some embodiments, the display of the digital model (and the displayed centre of mass) may be manipulated by the user 24 e.g. using touch inputs to the touchscreen display 32. For example, the user 24 may rotate, zoom etc. the displayed image.

In some embodiments, the touchscreen display 32 displays further information to the user 24 that may, for example, be determined by the processor 30 at step s12. An example of other information that may be displayed to the user 24 is a desired location or range of locations for the centre of mass of the container 2 and its contents. A further example of other information that may be displayed to the user 24 is a location, within the container 2, for a further item to be placed so as to move the centre of mass of the container 2 and its contents towards the desired location or range of locations for the centre of mass.

At step s18, the user 22 determines whether or not further items are to be loaded into the container 2. In other words, the user 24 determines whether or not the loading of the container 2 is finished.

In this embodiment, the user 24 uses the information displayed on the touchscreen display 32 to decide whether or not further items are to be loaded into the container 2. For example, the user 24 may determine that the combined weight of the container 2 and its contents is close to a pre-specified maximum combined weight and that no further items are to be placed into the container 2. Also for example, the user 24 may determine that the total weight of the contents of the container 2 is close to a pre-specified maximum content weight and that no further items are to be placed into the container 2. Also for example, the user 24 may determine that the centre of mass of the container 2 and its contents is close to a pre-specified desired location and that no further items are to be placed into the container 2.

If, at step s18, the user 22 determines that further items are to be loaded into the container 2, the process of Figure 4 proceeds to step s20. However, if, at step s18, the user 22 determines that no further items are to be loaded into the container 2, the process of Figure 4 proceeds to step s22.

At step s20, the user 24 (or another party) places a further item that is to be transported into the container 2.

In this embodiment, the further item is placed inside the container 2 such that the further item is either on the container floor 18 (i.e. such that the further item is in contact with one or more of the load sensing elements 20), or such that the further item is on top of another item that has already been placed inside the container 2.

In this embodiment, the user 24 uses the information displayed on the touchscreen display 32 to determine where in the container 2 to place the further item. For example, the user 24 may determine where in the container 2 to place the further item based on the displayed current centre of mass of the container 2 and its contents e.g. so as to move the centre of mass of the container 2 and its contents to be closer to a pre-specified desired location.

After step s20, the process of Figure 4 proceeds back to step s4.

Returning now to the case where, at step s18, the user 22 determines that no further items are to be loaded into the container 2, at step s22 the user 24 inputs a touch input into the touchscreen display 32. This touch input indicates that the loading of the container 2 with items is complete.

At step s24, the touchscreen display sends a signal corresponding to the touch input (i.e. a signal specifying that the loading of the container 2 is complete) to the processor 30.

At step s26, the processor 30 sends some or all of the information determined in the most recent iteration of step s12 to the second transceiver module 28 and the second storage module 31. This information is hereinafter referred to as the "current information set". For example, the current information set may include the current combined weight of the container 2 and its contents and the current centre of mass of the container 2 and its contents.

At step s28, the second storage module 31 stores the current information set received from the processor 30.

The current information set may be stored by the second storage module 31 alongside other information relating to the container 2, for example, information that may be acquired from the first storage module 27 such as an identifier for the container 2, information about an origin and/or destination of the container 2, information about an owner or user of the container 2, etc.

At step s30, the second transceiver module 28 transmits the current information set to the first transceiver module 26.

At step s32, the first transceiver module 26 sends the current information set to the first storage module 27.

At step s34, the first storage module 27 stores the current information set received from the first transceiver module 26.

The current information set may be stored by the first storage module 27 alongside other information relating to the container 2, for example, an identifier for the container 2, information about an origin and/or destination of the container 2, information about an owner or user of the container 2, etc.

At step s36, the user 24 seals the container 2 by closing and sealing the doors 16 of the container 2. Thus, the items that have been placed inside the container 2 are sealed inside the container 2.

Thus, a first process in which the container 2 is implemented is provided.

An advantage provided by the above described system and method is that, as the container 2 is being loaded with items by the user 24, properties of that container 2 (and the items placed therein) are presented to the user 24 so that the user 24 may determine, for example, when to stop loading the container 2, where in the container to place the next item, and so on. Thus, the above described systems and methods tend to provide for the intelligent packing of a container.

The above described systems and method tend to reduce the likelihood of containers being overloaded.

The above described systems and method tend facilitate the loading of a container in such a way that the centre of mass of the loaded container is close to a desired centre of mass. This tends to provide that the loaded containers are balanced. This tends to provide for easier transportation of containers.

The above described systems and method tend facilitate the loading of a container in such a way that the container may be lifted by lifting equipment e.g. so that the container and its contents do not exceed a lifting limit of lifting equipment. Also, the above described systems and method tend facilitate the loading of a container in such a way that the pressure exerted on the container floor by the items that are placed within the container does not exceed a maximum pressure that the floor is capable of withstanding.

The tablet computer is particularly convenient for the user to use.

Advantageously, container information (such as a container weight, centre of mass etc.) is stored onboard the relevant container. This tends to provide that, wherever a container is transported, relevant container information may be acquired at that location. Container information may easily be acquired from a container, e.g. by using a reading device to read information stored within the first storage module of a container.

Advantageously, container information (such as a container weight, centre of mass etc.) is also stored remotely from a container e.g. on the tablet computer or in a central database. This provides a back-up for the information stored on a container. Also this tends to provide that container information may be acquired even if no reading device is available, or if the container information stored on a container is lost or corrupted. Also, this tends to provide that container information may be acquired and processed at a location that is remote from the container.

What will now be described is a second process in which the container 2 is implemented.

Figure 5 is a schematic illustration (not to scale) showing an aircraft 36 that is to be used in the second process in which the container 2 is implemented.

In this embodiment, the aircraft 36 is a manned aircraft. The aircraft 36 comprises a cargo bay 38. The cargo bay 38 is a space or void within the fuselage of the aircraft 36 in which items (such as equipment or any other payloads) may be placed so that they may be transported by the aircraft 36. In this embodiment, the cargo bay 38 is suitable for containing a plurality of containers 2 of the type described in more detail earlier above with reference to Figures 1 and 2.

In this embodiment, the cargo bay 38 comprises a bottom surface that forms a floor of the cargo bay 38. This surface is hereinafter referred to as the "cargo bay floor" and is indicated in Figure 5 by the reference numeral 40.

In this embodiment, the cargo bay floor 40 comprises a plurality of further load sensing elements 42.

In this embodiment, each of the further load sensing elements 42 is configured to convert an input load (i.e. a weight of an item placed upon that further load sensing element 42) into an electrical signal that is indicative of the input load. The further load sensing elements 42 are arranged in a grid-like pattern. Each further load sensing element 42 has a different respective position on the cargo bay floor 40. In other embodiments, the further load sensing elements 42 are arranged in a different pattern.

In this embodiment, the entirety of the cargo bay floor 40 is covered by further load sensing elements 42 such that an item placed anywhere on the cargo bay floor 40 is in contact with (and acts as an input load to) at least one further load sensing element 42.

In this embodiment, the cargo bay floor 40 is a substantially flat surface. This may be provided by a top surface of each further load sensing element 42 being contiguous with a top surface of each other further load sensing element 42 that is adjacent to that further load sensing element 42.

Each further load sensing element 42 comprises any appropriate type of load sensor such as a strain gage (strain sensor) type load cell, a folk vibrating type, a string vibrating type, an electrostatic capacity type, a piezoelectric type, a magneto-striction type, or a gyroscope type. A further load sensing element 42 may be the same type of apparatus as a load sensing element 20.

In this embodiment, the aircraft 36 further comprises a third transceiver module 44. The third transceiver module 44 is connected to each of the further load sensing elements 42 such that information may be sent between each of the further load sensing elements 42 and the third transceiver module 44. The third transceiver module 44 is configured to transmit information received from the further load sensing elements 42, from the aircraft 36, to an entity remote from the aircraft 36 (e.g. the tablet computer 22).

The aircraft 36 is an alternative embodiment of the container 2 described above with reference to Figures 1 and 2.

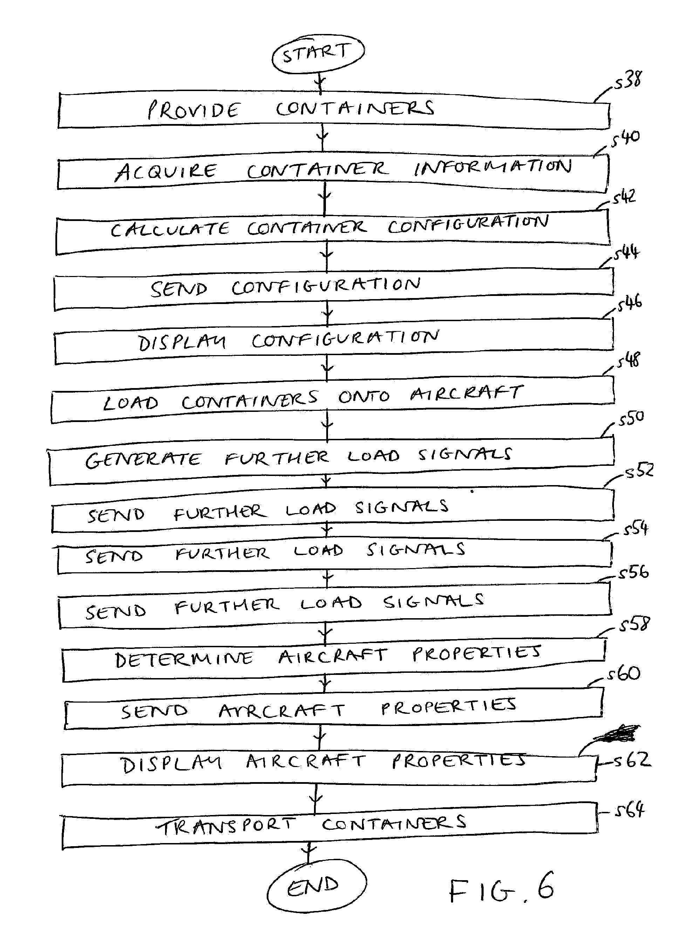

Figure 6 is a process flow chart showing certain steps of a second process in which the container 2 is implemented. The aircraft 36 is also implemented in the second process.

At step s38, a plurality of containers 2 is provided.

The plurality of containers 2 may, for example, be provided by the user 24.

In this embodiment, each of the containers 2 in the plurality is as described in more detail earlier above with reference to Figures 1 and 2. In this embodiment, the containers 2 in the plurality are all the same size, shape and weight (when empty). However, in other embodiments, one or more of the containers may have a different size, shape and/or weight to one or more of the other containers 2.

Also, in this embodiment, each of the containers 2 in the plurality has had at least one item sealed within it using the process described above with reference to Figure 4. One or more of the containers 2 in the plurality may have been loaded with different items and/or in a different way to one or more of the other containers 2 in the plurality.

In this embodiment, for each container 2 in the plurality, the first storage module 27 of that container 2 has stored within it a current information set relating to that container 2. A current information set for a container 2 may include the current combined weight of that container 2 and its contents and the current centre of mass of that container 2 and its contents (e.g. relative to some origin point). The centre of mass of a container may be a point in a 2-dimensional plane that is parallel to and includes the container floor of that container.

Also, for each container 2 in the plurality, the first storage module 27 of that container 2 has stored within it other information relating to the container 2, for example, an identifier for that container 2, information about an origin and/or destination of the container 2, information about an owner or user of the container 2, etc.

At step s40, for each of the containers 2 within the plurality, the processor 30 acquires the current combined weight of that container 2 and its contents and the current centre of mass of that container 2 and its contents. In other embodiments, the processor 30 acquires other container information instead of or in addition to the weight and centre of mass information.

The processor 30 may acquire information relating to a container 2 (e.g. weight information and/or centre of mass information) in any appropriate way.

As an example, in some embodiments, the user 24 inputs an identifier for a container 2 into the tablet computer 22 using the touchscreen display 32. Using this identifier, the processor 30 then acquires, from the second storage module 31, information relating to that container 2 that has been stored by the second storage module 31.

As a further example, in some embodiments, the user 24 operates the tablet computer 22 so that it acquires container information from the first storage module 27 of a container 2. For example, in embodiments, in which a container 2 comprises an RFID tag that stores container information, the user 24 may use the tablet computer 22 to read, or scan, that RFID tag so as to acquire the container information stored by it.

At step s42, using the acquired weight and centre of mass information, the processor 30 determines a configuration for some or all of the plurality of containers 2 within the cargo bay 38 of the aircraft 36.

To determine the configuration for the containers 2 within the cargo bay 38, the processor 30 may additionally use predetermined dimensions of the containers 2 and predetermined dimensions of the cargo bay 38.

In this embodiment, the processor 30 determines the configuration for the plurality of containers 2 within the cargo bay 38 of the aircraft 36 so as to satisfy one or more criteria. Examples of appropriate criteria that are to be satisfied include, but are not limited to:
(i) a criterion that the centre of mass of the combination of the aircraft 36 and the containers 2 within the cargo bay 38 of the aircraft 36 is within a pre-specified distance of a desired centre of mass location. The centre of mass of the combination of the aircraft 36 and the containers 2 within the cargo bay 38 may be a point in a 2-dimensional plane that is parallel to and includes the cargo bay floor 40;
(ii) a criterion that the total weight of the containers 2 within the cargo bay 38 does not exceed a threshold container weight;
(iii) a criterion that the combined weight of the aircraft 36 and the containers 2 within the cargo bay 38 does not exceed a threshold combined weight; and
(iv) a criterion that certain containers 2 are located at certain locations within the cargo bay 38, for example, a criterion specifying that the heaviest containers 2 are located closest to the wings of the aircraft 36.

In other words, the processor 30 determines how some or all of the containers 2 are to be loaded into the cargo bay 38 of the aircraft 36.

The determination of the configuration for the containers 2 within the cargo bay 38 may comprise the processor 30 performing an optimisation process.

At step s44, the processor 30 sends the determined configuration to the touchscreen display 32.

At step s46, the touchscreen display 32 displays the received configuration to the user 24.

The determined configuration may be presented in any appropriate way. For example, the determined configuration may be presented on the touchscreen display 32 as a step-by-step process that the user 24 may follow. This advantageously tends to facilitate the user 24 loading the container 2 onto the aircraft 36 so that the containers 2 are arranged in accordance with the determined configuration.

At step s48, the user 24 places the plurality of containers 2 into the cargo bay 38 of the aircraft 36 such that the containers 2 are in accordance with the displayed configuration.

At step s50, each of the further load sensing elements 42 generate an electrical signal indicative of an input load to that further load sensing element 42. These signals are hereinafter referred to as "further load signals".

At step s52, the further load sensing elements 42 send the further load signals to the third transceiver module 44. Each further load signal may include an identifier for identifying which of the further load sensing elements 42 produced that signal.

At step s54, the third transceiver module 44 transmits the further loads signals to the second transceiver module 28.

At step s56, the second transceiver module 28 sends the further load signals to the processor 30.

At step s58, the processor 30 processes the received further load signals to determine the following properties or parameters relating to the aircraft 36. In other embodiments, the further loads signals are processed by the processor 30 to determine one or more different properties or parameters relating to the aircraft 36 instead of or in addition to one or more of the following properties or parameters.

A first parameter that is determined by the processor 30 at step s56 is a location for the centre of mass of the combination of the aircraft 36 and the containers 2 placed therein. A second parameter that is determined by the processor 30 at step s56 is a total weight of the containers 2 that have been placed into the cargo bay 38 of the aircraft 36. A third parameter that is determined by the processor 30 is a footprint of the container 2 on the cargo bay floor 38.

In some embodiments, the processor 30 may determine one or more of the above mentioned properties or parameters of the aircraft 36 without using the further load signals. For example, the centre of mass of the combination of the aircraft 36 and the containers 2 may be determined directly using the initial centre of mass of the aircraft 36, the mass of the aircraft 36, the container information acquired by the processor 30 at step s40 (i.e. the masses of the containers 2 and the centres of masses of the containers 2), and the configuration for the containers 2 determined at step s42. In such embodiments, the further load signals may be used by the processor 30 to verify or otherwise the properties or parameters of the aircraft 36 that have been determined without using the further load signals.

At step s60, the processor 30 sends the information determined at step s58 to the touchscreen display 32. Also, the processor 30 sends the information determined at step s58 to the aircraft 36 (e.g. via the second and third transceiver modules 28, 44).

At step s62, the touchscreen display 32 displays the information received by it to the user 24. The user 24 may use the displayed information to verify or otherwise that the aircraft 36 is safely loaded with the containers 2.

At step s64, the aircraft 36 transports the containers 2 that have been placed inside the cargo bay 38 to a different location. The information sent to the aircraft 36 from the processor 30 at step s60 may be used to control the aircraft 36. For example, a pilot of the aircraft 36 may use the weight and/or centre of mass information of the aircraft 36 to control the aircraft 36.

Thus, a second process in which the container 2 is implemented is provided.

Advantageously, the above described methods and apparatus facilitate the loading of an aircraft. Using the above described methods and apparatus, it tends to be possible to load an aircraft more quickly and efficiently compared to using conventional methods. For example, conventionally, a loadmaster may manually determine how an aircraft is to be loaded. The above described methods and apparatus advantageously tend to reduce the workload of the loadmaster and thereby speed up the loading of the aircraft.

Advantageously, the above described methods and apparatus provide a measurement of the centre of gravity, weight etc. of the loaded aircraft. This tends to facilitate safe operation of the aircraft.

Advantageously, the further load sensing elements on the floor of the cargo bay may take load measurements during flight. Thus, the shifting of cargo during flight may be monitored. The monitoring or recording of load measurements taken by the load sensing elements or the further load sensing elements may be used to detect the theft or tampering of goods

Advantageously, the likelihood of an aircraft being overloaded or loaded in a dangerous way tends to be eliminated.

Advantageously, retrofitting load sensing elements to existing containers tends to be relatively simple. In some embodiments, apparatus comprising a substrate (e.g. a flexible sheet or mat) and a plurality of load sensors (which may be disposed on, or embedded in the substrate in a distributed fashion) may be provided. This apparatus may then be attached to a surface of a conventional container so as to provide the container described above with reference to Figures 1 and 2.

Apparatus, including the processor, for implementing the above arrangement may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowcharts of Figures 4 and 6 and described above may be omitted or such process steps may be performed in differing order to that presented above and shown in Figures 4 and 6. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the container is a cuboid in shape and has the dimensions described earlier above with reference to Figure 1. However, in other embodiments the container is a different size and/or shape. Also, the container may be made of a different material to that mentioned above (e.g. plastic).

In the above embodiments, the container comprises load sensing elements located on the floor of the container. In other embodiments, load sensing elements may be located on one or more different surfaces of the container, for example a bottom surface of the container. A container may comprise any number of load sensing elements that may be arranged in any appropriate way. In some embodiments, the floor of the container is provided by a single flat surface underneath which may be located load sensing elements (e.g. located at points around the periphery of the floor surface).

In the above embodiments, the container is implemented in the system described above with reference to Figure 3. However, in other embodiments, the container is implemented in a different system, e.g. a system comprising a plurality of containers or a different number of tablet computers.

In some embodiments, a different type of computer (such as a desktop computer, or a smartphone) may be used instead of or in addition to the tablet computer. In some embodiments, the computer may be ruggedized to reduce the likelihood of the computer being damaged. In some embodiments, a computer may comprise a different type of user interface instead of or in addition to the touchscreen display.

In the above embodiments, one or more of containers is loaded into a larger container, namely the aircraft, for transportation. However, in other embodiments, one or more of containers is loaded into different type of larger container such as a different type of vehicle, for example a land-based vehicle (e.g. a lorry) or a water-based vehicle (e.g. a container ship).

In the above embodiments, the tablet computer may be used to indicate to the user where in a container to place items being loaded into that container. For example, in the process of Figure 6 the tablet computer displays to the user (e.g. as a step-by-step process) a configuration for the containers in the cargo bay of the aircraft. However, in other embodiments, it is indicated to the user where in a container to place items in a different way. For example, in some embodiments, a surface of the container comprises a plurality of light-emitting elements (or other indicating structures) that may be controlled, e.g. by the tablet computer, so as to indicate to the user where in a container to place items being loaded into that container.

In the above embodiments, the container comprises load sensing elements, a transceiver module and a storage module. In other embodiments, the container additionally comprises one or more different types of systems or modules. Any such additional system or module may be connected to the first transceiver module such that information from an additional system may be transmitted to an entity remote from the container. As an example, in some embodiments, the container further comprises one or more global positioning system (GPS) receivers. In such embodiments, a GPS receiver may be configured to receive GPS signals from GPS satellites. The received information may be used to determine a current location of the GPS receiver (and therefore of the container) on Earth. Thus, a GPS receiver may be used to track the container. In some embodiments, the container further comprises environmental sensors which may be configured to measure environmental conditions within and/or outside of the container. As a further example, the environmental sensors may include one or more sensors that are configured to measure a temperature, a humidity level, a light level, a radiation level etc. within the container. Also, for example, one or more environmental sensors may be configured to measure or detect movement (e.g. of a person or animal) within the interior of the container, the presence of smoke within the container, the presence of vapour (e.g. a certain chemical vapour) within the container, etc. In some embodiments, the container additionally includes one or more power sources for one or more of the systems or modules of the container. For example, the container may comprise one or more batteries or power generators (which may include renewable power sources such as a solar panel or wind turbine) for powering one or more components of the container.

## Claims

1. A method comprising:
providing a first container (36);
providing a plurality of second containers (2), the plurality of second containers (2) being for loading into the first container (36);
for each of the second containers (2), acquiring, by one or more processors (30), a weight or mass of that second container (2) and its contents;
for each of the second containers (2), acquiring, by one or more processors (30), a centre of mass of that second container (2) and its contents;
using the acquired weights or masses and the acquired centres of mass, and using dimensions of the first container (36), determining, by the one or more processors (30), a configuration for the second containers (2) within the first container (2); wherein
the configuration for the second containers (2) within the first container (36) is determined such that one or more criteria are satisfied.

2. A method according to claim 1, wherein the method further comprises:
placing the second containers (2) into the first container (36) in accordance with the determined configuration.

3. A method according to claim 2, wherein
the first container (36) comprises a plurality of load cells (42), the load cells (42) being spatially separated from one another;
placing the second containers (2) into the first container (36) causes each of the second containers (2) to exert a weight force upon one or more of the load cells (42); and
the method further comprises:
after the second containers (2) have been placed into the first container (36) in accordance with the determined configuration, generating, by each of the load cells (42) that have a weight force exerted upon them by one or more second containers (2), a load signal indicative of the weight exerted on that load cell (42); and
processing, by the one or more processors (30), the one or more load signals so as to determine values for one or more parameters.

4. A method according to claim 3, wherein the method further comprises, using the one or more determined parameter values, verifying or otherwise that the second containers (2) have been placed into the first container (36) in accordance with the determined configuration.

5. A method according to claim 3 or 4, wherein:
the first container (36) is a vehicle; and
the method further comprises controlling the vehicle dependent upon the one or more determined parameter values.

6. A method according to any of claims 1 to 5, wherein the one or more criteria comprise at least one criterion selected from the group of criteria consisting of: a criterion that the centre of mass of the combination of the first container (36) and its contents is within a pre-specified distance of a desired centre of mass location; a criterion that a total weight or mass of the second containers (2) in the first container (36) does not exceed a first threshold value; a criterion that the combined weight or mass of the first container (36) and its contents does not exceed a second threshold value; and a criterion that a particular second container (2) is located at a particular location within the first container.

7. A method according to any of claims 1 to 6, wherein
each of the second containers (2) comprises a storage module (27) storing the weight or mass and the centre of mass of that second container (2) and its contents; and
the one or more processors (30) acquire the weights or masses and the centres of mass of the second containers (2) from the storage modules (27).

8. A method according to claim 7, wherein
each of the second containers (2) comprises a transmitter module (26) operative coupled to the storage module (26) of that second container (2);
the steps of acquiring, by the processors (30), the weights or masses and the centres of mass comprises, for each second container (2), transmitting, by the transmitter module (26) of that container (2) to a receiver module (28), a signal specifying the weight or mass and the centre of mass of that second container (2); and
the receiver module (28) is operatively coupled to the one or more processors (30).

9. A method according to any of claims 1 to 8, wherein
each of the second containers (2) comprises a plurality of load cells (20), the load cells (20) being spatially separated from one another;
the steps of acquiring, by the processors (30), the weights or masses and the centres of mass comprises:
for each second container (2), generating, by each load cell (20) of that second container (2), a load signal indicative of a weight exerted on that load cell (20) by one or more objects contained within that second container (2); and
for each second container (2), processing, by the one or more processors (30), the one or more load signals generated by the one or more load cells (20) of that second container (2) so as to determine the weight or mass and the centre of mass of that second container (2).

10. A method according any of claims 1 to 9, wherein the first container (36) is a vehicle.

11. Apparatus comprising:
a first container (36);
a plurality of second containers (2), the plurality of second containers (2) being for loading into the first container (36); and
one or more processors (30) configured to:
for each of the second containers (2), acquire a weight or mass of that second container (2) and its contents;
for each of the second containers (2), acquire a centre of mass of that second container (2) and its contents;
using the acquired weights or masses and the acquired centres of mass, and using dimensions of the first container (36), determining, by the one or more processors (30), a configuration for the second containers (2) within the first container (36); wherein
the configuration for the second containers (2) within the first container (36) is determined such that one or more criteria are satisfied.

12. Apparatus according to claim 12, wherein
the first container (36) comprises a plurality of load cells (42), the load cells (42) being spatially separated from one another;
each of the load cells (42) is configured to, in response to the second containers (2) being placed into the first container (36) such that each of the second containers (2) exerts a weight force upon one or more of the load cells (42), generate a load signal indicative of the weight exerted on that load cell (42); and
the one or more processors (30) are further configured to process the one or more load signals so as to determine values for one or more parameters.

13. Apparatus according to claim 12, wherein the one or more processors (30) are further configured to, using the one or more determined parameter values, verify or otherwise that the second containers (2) have been placed into the first container (36) in accordance with the determined configuration.

14. Apparatus according any of claims 11 to 13, wherein the first container (36) is a vehicle.

15. Apparatus according any of claims 11 to 14, wherein the one or more processors (30) are located in one or more devices (22) that are remote from the first container (36) and the second containers (2).
